# NEUE EUROPÄISCHE PATENTSCHRIFT

(11) **EP 1 857 340 B2**
(45) Veröffentlichungstag und Bekanntmachung des Hinweises auf die Entscheidung über den Einspruch: **24.04.2013**
(45) Hinweis auf die Patenterteilung: 02.06.2010
(21) Anmeldenummer: 07107025.4
(22) Anmeldetag: 26.04.2007
(51) Int. Cl.: B61C 17/00, B61D 13/00, B62D 25/10, B61F 19/04

(54) **Großräumiges Fahrzeug, insbesondere Stadtbahnwagen, mit einer Fronthaube**
Mass transit vehicles, in particular an urban railcar, with a front bonnet
Véhicule de transport en commun, en particulier tramway, doté d'un capot avant

(30) Priorität: 18.05.2006 DE 102006023475
(43) Veröffentlichungstag der Anmeldung: 21.11.2007
(73) Patentinhaber: Siemens Aktiengesellschaft, 80333 München (DE)
(72) Erfinder: Franz, Andreas, 46562 Voerde (DE); Jochmann, Thomas, 47807 Krefeld (DE); Schade, Burkhard, 44879 Bochum (DE)

(56) Entgegenhaltungen:
- EP-A- 1 930 227
- EP-A1- 0 686 540
- EP-A1- 0 728 649
- EP-A1- 1 350 703
- EP-A2- 1 741 611
- WO-A-2005/028275
- BE-A- 435 179
- DE-A1- 2 319 061
- DE-A1- 4 006 811
- DE-A1- 4 415 793
- DE-A1- 10 015 420
- DE-A1- 19 921 927
- DE-T2- 68 905 093
- DE-U1- 9 409 208

## Beschreibung

Die Erfindung betrifft ein großräumiges Fahrzeug, insbesondere einen Stadtbahnwagen, mit einer vor der Fahrzeugkarosserie angeordneten und mit dieser beweglich verbundenen Fronthaube.

Durch die Druckschrift EP 0 686 540 A1 ist eine Abdeckung einer Mittelpufferkupplung für ein z.B. als Straßenbahn einsetzbares Schienenfahrzeug mit einer Fronthaube bekannt, welche die Stirnseite des Fahrzeuges und die der Mittelpufferkupplung in einem Abstand abdeckt. Die Fronthaube besitzt beidseitig je einen starr angebrachten Lenker. Diese Lenker sind mit senkrecht im Fahrzeug angeordneten Stangen verbunden und durch einen gemeinsamen Antrieb gleichzeitig und gleichmäßig heb- und senkbar. Dadurch kann die Mittelpufferkupplung einerseits zum Kuppeln mit einem anderen Fahrzeug freigelegt und andererseits zum Schutze anderer Verkehrsteilnehmer abgedeckt werden. Diese Fronthaube kann also zwei Stellungen "Oben" und "Unten" einnehmen.

Zum Stand der Technik (DE 199 21 927 A1) gehört ferner ein großräumiges Fahrzeug, insbesondere Stadtbahnwagen oder Omnibus, bei dem die Stirnwand der Fahrzeugkarosserie ein Frontfenster und einen unterhalb dieses Fensters befindlichen Wandabschnitt aufweist. Dieser Wandabschnitt ist durch eine heb- und senkbar mit der Fahrzeugkarosserie verbundene Fronthaube gebildet, so dass auch durch diese Bauweise die beiden Stellungen "Oben" und "Unten" erreichbar sind.

Der Erfindung liegt die Aufgabe zugrunde, ein großräumiges Fahrzeug auf möglichst einfache Weise so zu gestalten, dass für Montage- und Wartungsarbeiten ein besonders leichter Zugang zu Baugruppen bzw. Aggregaten geschaffen ist, die sich hinter der Fronthaube an oder in der Fahrzeugkarosserie befinden.

Diese Aufgabe wird erfindungsgemäß dadurch gelöst, dass die Fronthaube gegenüber der Fahrzeugkarosserie nach vorne klappbar angebracht ist. Das Fahrzeug hat nunmehr eine Fronthaube, die in die beiden üblichen Positionen "Oben" bzw. "Unten" und außerdem in die für Montage- und Wartungsarbeiten günstige dritte Stellung "Geklappt" bewegt werden kann.

Vorteilhafte Ausgestaltungen der Erfindung sind in den Unteransprüchen angegeben. Demgemäß kann die Fronthaube als Abdeckung für eine ein- und ausfahrbare Fahrzeugkupplung ausgebildet sein. Alternativ besteht die Möglichkeit, die Fronthaube als Abdeckung für an der Fahrzeugkarosserie angebrachte Aggregate - beispielsweise ein Scheibenwischergerät mit Wasserbehälter, elektrische Komponenten oder dergleichen - zu gestalten. Die Fronthaube kann durch ein einfaches Gestänge an der Fahrzeugkarosserie heb- und senkbar angelenkt und mittels einer Schwenkmechanik klappbar an der Fahrzeugkarosserie befestigt sein. Im Sinne einer schnell und einfach auszuführenden Anbringung empfiehlt es sich, die Fronthaube mit dem Gestänge und der Schwenkmechanik als vollständig vormontierte und geprüfte Baugruppe auszuführen.

Im Weiteren wird die Erfindung anhand eines Ausführungsbeispiels näher beschrieben, das in der Zeichnung prinzipartig dargestellt ist. Es zeigen jeweils in einem Längsschnitt
- Fig. 1: den Kopfbereich eines Stadtbahnwagens mit einer Fronthaube in einer ersten, unteren Position,
- Fig. 2: eine der Fig. 1 entsprechende Darstellung mit der Fronthaube in einer zweiten, oberen Position,
- Fig. 3: eine ebenfalls der Fig. 1 entsprechende Darstellung mit der Fronthaube in einer dritten, nach vorne geklappten Position.

Ein Fronthaube 1 ist über ein Gestänge 3 am Kopf einer durch Festpunkte symbolisierten Fahrzeugkarosserie 2 angelenkt. Die Fronthaube 1 enthält Beleuchtungskörper 4.

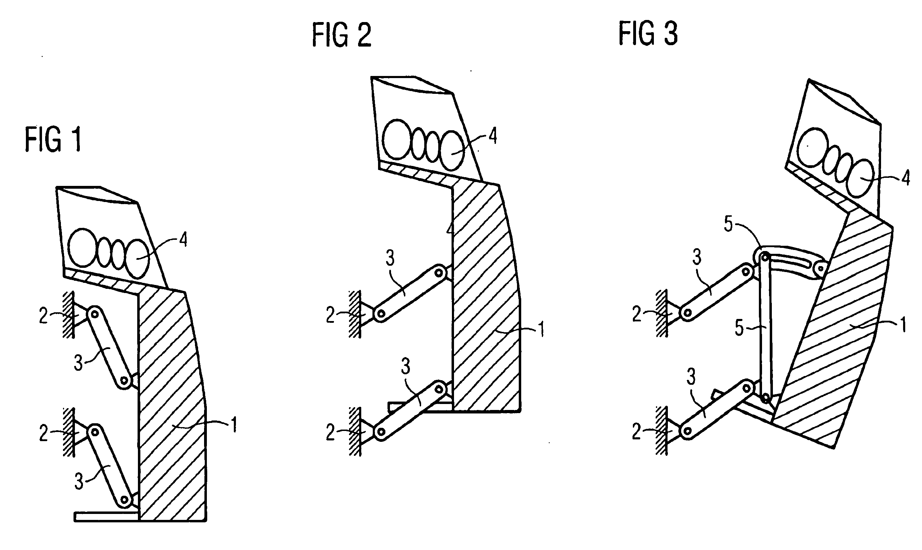

In ihrer unteren, geschlossenen Stellung dient die Fronthaube 1 im Ausführungsbeispiel als Abdeckung für eine in Zeichnungsebene der Fig. 1 links angeordnete, ein- und ausfahrbare Fahrzeugkupplung, die sich hier in ungekuppelter Ruhestellung befindet. Für den Fahrbetrieb mit einem zweiten Fahrzeug (Traktionsfahrt) wird die Fronthaube 1 in die Stellung gemäß Fig. 2 hoch geschwenkt und die Fahrzeugkupplung unterhalb der Fronthaube 1 ausgefahren.

Die Fronthaube 1 ist zusätzlich zu dem Gestänge 3 mittels einer allein in Fig. 3 gezeigten Schwenkmechanik 5 derart an der Fahrzeugkarosserie 2 befestigt, dass sie nach vorne geklappt werden kann. Der Weg, um den die Fronthaube 1 nach vorne geklappt werden kann, wird durch ein Fangband der Schwenkmechanik 5 begrenzt. Die Schwenkmechanik 5 kann auch eine Feder aufweisen, die im Sinne einer Bremse sanfte Klappbewegungen der Fronthaube 1 ermöglicht.

In der nach vorne geklappten Position der Fronthaube 1 besteht ein wesentlich vergrößerter Freiraum zwischen der Fronthaube 1 und der Stirnwand der Fahrzeugkarosserie 2, so dass an der Fahrzeugkarosserie 1 angebrachte Aggregate, wie beispielsweise ein Scheibenwischergerät mit Wasserbehälter sowie elektrische Komponenten, und die Beleuchtungskörper 4 für Montage- und Wartungsarbeiten gut zugänglich sind. Dadurch sind diese Arbeiten einfach und schnell durchzuführen, was vorteilhaft geringere Standzeiten des Fahrzeuges zur Folge hat.

Die Fronthaube 1 mit dem Gestänge 3, der Schwenkmechanik 5 und den Beleuchtungskörpern 4 ist bevorzugt als vollständig vormontierte, mechanisch bzw. elektrisch geprüfte Baugruppe ausgeführt, die schnell und einfach an der Fahrzeugkarosserie 2 anzubringen ist.

## Patentansprüche

1. Großräumiges Fahrzeug, insbesondere Stadtbahnwagen, mit einer vor der Fahrzeugkarosserie (2) angeordneten und mit dieser beweglich verbundenen Fronthaube (1), welche zwischen einer unteren und geschlossenen Stellung, in der sie als Abdeckung für eine ein- und ausfahrbare Fahrzeugkupplung dient, und einer oberen Stellung bewegbar ist, die ein Ausfahren der Fahrzeugkupplung für einen Fahrbetrieb mit einem zweiten Fahrzeug ermöglicht, **dadurch gekennzeichnet, dass** die Fronthaube (1), ausgehend von der oberen Stellung, zu einer Bewegung in eine dritte, geklappte Stellung für Montage- und Wartungsarbeiten gegenüber der Fahrzeugkarosserie (2) nach vorne klappbar angebracht ist.

2. Großräumiges Fahrzeug nach Anspruch 1, **dadurch gekennzeichnet, dass** die Fronthaube (1) durch ein Gestänge (3) an der Fahrzeugkarosserie (2) heb- und senkbar angelenkt ist.

3. Großräumiges Fahrzeug nach einem der vorhergehenden Ansprüche, **dadurch gekennzeichnet, dass** die Fronthaube (1) mittels einer Schwenkmechanik (5) klappbar an der Fahrzeugkarosserie (2) befestigt ist.

4. Großräumiges Fahrzeug nach Anspruch 3, **dadurch gekennzeichnet, dass** die Fronthaube (1) mit dem Gestänge (3) und der Schwenkmechanik (5) als vollständig vormontierte und geprüfte Baugruppe ausgeführt ist.

## Claims

1. High-capacity vehicle, in particular a metropolitan railway vehicle, having a front bonnet (1) which is arranged in front of the vehicle bodywork (2) and is connected to the vehicle bodywork such that it can move, and which is movable between a lower and closed position, in which it serves as a cover for a vehicle coupling which can be retracted and extended, and an upper position, which enables the vehicle coupling to be extended for travelling operation with a second vehicle, **characterized in that** the front bonnet (1), proceeding from the upper position, for a movement into a third, folded position for installation and maintenance work, is fitted such that it can be folded forwards with respect to the vehicle bodywork (2).

2. High-capacity vehicle according to Claim 1, **characterized in that** the front bonnet (1) is articulated such that it can be raised and lowered by means of a linkage (3) on the vehicle bodywork (2).

3. High-capacity vehicle according to one of the preceding claims, **characterized in that** the front bonnet (1) is attached to the vehicle bodywork (2) such that it can be folded by means of a pivoting mechanism (5).

4. High-capacity vehicle according to Claim 3, **characterized in that** the front bonnet (1) together with the linkage (3) and the pivoting mechanism (5) are designed as a completely preassembled and tested assembly.

## Revendications

1. véhicule non compartimenté, notamment wagon de chemin de fer urbain, comprenant un capot ( 1 ) avant, qui est disposé devant la carrosserie ( 2 ) du véhicule, qui est relié à celui-ci d'une manière amovible et qui peut être déplacé entre une position inférieure et fermée, dans laquelle il sert de recouvrement d'un accouplement de véhicule pouvant être escamoté et déployé, et une position supérieure qui rend possible un déplacement de l'accouplement de véhicule pour un fonctionnement en trajet avec un deuxième véhicule, **caractérisé en ce que** le capot ( 1 ) avant est monté rabattable vers l'avant par rapport à la carrosserie ( 2 ) du véhicule, à partir de la position supérieure en un mouvement vers une troisième positon rabattue pour des travaux de montage et d'entretien.

2. véhicule non compartimenté suivant la revendication 1, **caractérisé en ce que** le capot ( 1 ) avant est articulé par une tringle ( 3 ) sur la carrosserie ( 2 ) du véhicule de manière à pouvoir être soulevé et abaissé.

3. véhicule non compartimenté suivant l'une des revendications précédentes, **caractérisé en ce que** le capot ( 1 ) avant est fixé de manière rabattable à la carrosserie ( 2 ) du véhicule au moyen d'un mécanisme ( 5 ) de pivotement.

4. Véhicule non compartimenté suivant la revendication 3, **caractérisé en ce que** le capot ( 1 ) avant est réalisé avec la tringle ( 3 ) et le mécanisme ( 5 ) de pivotement sous la forme d'un module monté entièrement à l'avance et contrôlé.
